# DEMANDE DE BREVET EUROPEEN

(11) **EP 0 989 702 A1**
(43) Date de publication de la demande: **29.03.2000**
(21) Numéro de dépôt: 98402366.3
(22) Date de dépôt: 25.09.1998
(51) Int. Cl.: H04L 12/437, H04J 14/02, H04Q 11/00

(54) **Réseau local de télécommunication**

(71) Demandeur: Eolring International, 14000 Caen (FR)
(72) Inventeur: Baroin, Frédéric, 14000 Caen (FR); Le Norcy, David, 14630 Cagny (FR)
(74) Mandataire: Joly, Jean-Jacques

(57) **Abrégé**

Le réseau (RLb) comprend plusieurs sous-réseaux en anneau (ST1 à ST3). Chaque sous-réseau en anneau (ST1) comprend des modules de raccordement (M1b, M3b, M6b) reliés entre eux de manière à former au moins un anneau (A1₁ à A1_{N1}). Le réseau est caractérisé en ce qu'il a une configuration générale en anneau et en ce que le ou les anneaux de chaque sous-réseau (ST1) traversent directement au moins un module de raccordement d'un autre sous-réseau (ST2, ST3). Chaque module de raccordement du réseau est relié à deux autres modules de raccordement, non nécessairement du même sous-réseau, par des nappes de fibres optiques (NP1 à NP8). En outre, chaque module de raccordement est divisé en plusieurs sous-modules reliés entre eux par des connecteurs internes au module, de sorte que chaque sous-module puisse être remplacé indépendamment des autres sous-modules.

## Description

La présente invention concerne de manière générale les réseaux de télécommunication, et plus particulièrement les réseaux locaux de télécommunication.

Des réseaux locaux de télécommunication sont connus dans la technique antérieure.

Des réseaux locaux dits "hiérarchiques en étoile" comportent des boîtiers concentrateurs (dénommés "hubs" en anglais) auxquels sont reliés des stations ou des serveurs, et des bus formés par des câbles métalliques ou des fibres optiques pour relier les boîtiers concentrateurs entre eux. Les bus ont typiquement un débit binaire de 10 à 100 Mbit/s (voire 155 Mbit/s avec la technologie ATM). Dans ces réseaux locaux, qui sont par exemple du type Ethernet (marque déposée), la bande passante utile est partagée entre les différents utilisateurs.

Afin de remédier à cet inconvénient et éviter que les stations utilisent toutes la même ressource de débit, d'autres réseaux locaux, également hiérarchiques en étoile, utilisent des commutateurs. Toutefois, pour augmenter le débit de manière significative, il est nécessaire d'augmenter la complexité de la structure du réseau en terme de routage des informations.

En outre, toute panne survenant dans l'un des réseaux ci-dessus, telle que la rupture d'un lien physique ou la défaillance de l'un des éléments du réseau, entraîne la perte d'une partie du réseau. Une solution pour diminuer la sensibilité du réseau aux pannes est d'utiliser des équipements redondants pour accroître le nombre de chemins possibles pour l'acheminement des informations. Cette solution augmente également la complexité de la structure du réseau.

Par ailleurs, lorsque des opérations doivent être effectuées sur le réseau pour par exemple raccorder de nouvelles stations pour lesquelles aucune prise de raccordement n'a été initialement prévue, ou pour remplacer des boîtiers concentrateurs par des commutateurs afin d'augmenter le débit, le fonctionnement du réseau se trouve en général très perturbé.

Dans d'autres réseaux locaux de la technique antérieure, dits "réseaux en double anneau", des stations sont reliées entre elles en série par des liaisons unidirectionnelles de façon à former des anneaux primaire et secondaire. En fonctionnement normal, toutes les communications échangées entre les stations sont acheminées par l'anneau primaire. L'anneau secondaire n'est utilisé que lorsqu'une panne a été détectée dans le réseau. Les anneaux primaire et secondaire sont alors mis en contact en des points du réseau situés de part et d'autre de la panne afin de rétablir la continuité du réseau. Ce type de réseau en double anneau est limité en débit en ce qu'un seul anneau transmet des communications en fonctionnement normal.

Dans la technique antérieure, certains réseaux locaux comprennent des sous-réseaux interconnectés. Des terminaux raccordés à un premier sous-réseau peuvent alors échanger des données avec des terminaux raccordés à un second sous-réseau. Ces sous-réseaux sont agencés selon des structures qui sont, de manière générale, séparées physiquement.

Egalement, dans le cas d'un bâtiment partagé par plusieurs entreprises, chaque entreprise occupant un local propre dans le bâtiment, il est nécessaire d'attendre la configuration interne définitive du bâtiment, c'est-à-dire l'attribution des différents locaux aux entreprises, avant de pouvoir installer des réseaux locaux indépendants pour celles-ci. Chacun de ces réseaux comprend alors ses propres commutateurs et ses propres câbles qui sont physiquement totalement indépendants des commutateurs et câbles utilisés par d'autres réseaux locaux dans le bâtiment, sauf en d'éventuels points d'interconnexion entre ces réseaux.

La présente invention vise à fournir une structure générale simple de réseau divisé en sous-réseaux fonctionnellement indépendants ou interconnectés, dans laquelle la configuration des sous-réseaux peut être aisément modifiée ou complétée une fois les éléments de base du réseau, tels que les câbles et la structure globale des boîtiers de raccordement, installés.

A cette fin, un réseau de télécommunication comprenant plusieurs sous-réseaux en anneau, chaque sous-réseau en anneau comprenant des modules de raccordement reliés entre eux de manière à former au moins un anneau, est caractérisé en ce qu'il a une configuration générale en anneau et en ce que ledit au moins un anneau de chaque sous-réseau traverse directement au moins un module de raccordement d'un autre sous-réseau.

Par l'expression "traverse directement" on entend que ledit au moins un anneau de chaque sous-réseau ne traverse aucun circuit de commutation dans ledit au moins un module de raccordement et les données circulant sur cet anneau et pénétrant dans le module de raccordement ressortent systématiquement du module de raccordement sur le même anneau.

Typiquement, chaque module de raccordement du réseau est relié à deux autres modules de raccordement, non nécessairement du même sous-réseau, par des nappes de fibres optiques. En outre, de préférence, chaque module de raccordement du réseau est relié à tous les anneaux du réseau.

Egalement, chaque module de raccordement est divisé en plusieurs sous-modules reliés entre eux par des connecteurs internes au module de sorte que chaque sous-module puisse être remplacé indépendamment des autres sous-modules, sous tension ou non.

Ainsi, il est possible selon l'invention d'installer préalablement la structure globale du réseau dans un bâtiment, en faisant traverser chaque pièce du bâtiment par une nappe de fibres optiques et en équipant chaque pièce d'un ou plusieurs modules de raccordement, puis d'adapter le réseau à une configuration souhaitée en ouvrant les modules de raccordement et en y insérant des sous-modules appropriés.

Un moyen peut alors être prévu, dans l'un des modules de raccordement, pour interconnecter au moins deux sous-réseaux.

Egalement, un moyen peut être prévu, dans l'un des modules de raccordement, pour interconnecter un sous-réseau avec un autre réseau de télécommunication.

De préférence, l'un au moins des sous-réseaux comprend au moins deux anneaux transmettant des signaux suivant des sens opposés, afin qu'en cas de panne dans le sous-réseau, la continuité du sous-réseau puisse être rétablie.

Egalement, l'un au moins des sous-réseaux peut comprendre un moyen pour commuter des données vers au moins un anneau supplémentaire de secours du sous-réseau en cas de rupture du ou des anneaux du sous-réseau.

La présente invention vise en outre à fournir un réseau local à débit élevé, et notamment à débit binaire bien plus élevé que les réseaux en anneau de la technique antérieure.

A cette fin, l'un au moins des sous-réseaux comprend plusieurs anneaux, et chaque module de raccordement de ce sous-réseau comprend un moyen pour sélectionner l'un desdits plusieurs anneaux en réponse à la réception par ledit module de raccordement de données délivrées par un premier terminal raccordé audit module de raccordement et destinées à un second terminal raccordé à un autre module de raccordement du sous-réseau, et un moyen pour transmettre lesdites données sur l'anneau sélectionné vers le second terminal.

Selon un aspect de l'invention, ledit anneau sélectionné est l'anneau du sous-réseau qui est le moins encombré.

Selon un autre aspect de l'invention, ledit anneau sélectionné est celui pour lequel le chemin à parcourir par lesdites données du premier terminal vers le second terminal est le plus court.

Typiquement, chaque module de raccordement du réseau comprend un sous-module d'émission-réception incluant des moyens d'émission et des moyens de réception pour respectivement émettre et recevoir des signaux sur des anneaux du sous-réseau correspondant, un sous-module de commutation pour commuter des données reçues d'au moins un terminal raccordé au module de raccordement vers les moyens d'émission et pour commuter des données reçues des anneaux du sous-réseau correspondant par le sous-module d'émission-réception vers ledit moins un terminal ou vers lesdits anneaux en fonction d'adresses contenues dans ces données, et un sous-module d'interface réalisant l'interface entre ledit au moins un terminal et le sous-module de commutation.

De préférence, les moyens d'émission et les moyens de réception comprennent respectivement des lasers et des photodétecteurs fonctionnant à une longueur d'onde comprise entre 750 nm et 1300 nm. Les lasers et photodétecteurs peuvent être du type de ceux utilisés classiquement dans les lecteurs de disques optiques et fonctionnant à une longueur d'onde d'environ 850 nm.

En outre, de manière à minimiser le nombre de modules de raccordement par pièce du bâtiment, au moins l'un desdits modules de raccordement peut comprendre plusieurs connecteurs auxquels peuvent être reliés plusieurs terminaux respectifs pour raccorder ces derniers au réseau. Les terminaux respectifs peuvent être un terminal informatique, un terminal téléphonique, un terminal de gestion de bâtiment gérant par exemple un système d'alarme à capteurs dans le bâtiment, ou un terminal multimédia conforme à la norme P1394 établie par l'IEEE (Institute of Electrical and Electronic Engineers). Dans le cas où un terminal téléphonique est relié au module de raccordement, le réseau conforme à l'invention comprend un autocommutateur privé de type PABX (Private Automatic Branch Exchange) relié au réseau téléphonique commuté public.

Les données transmises à travers le réseau conforme à l'invention peuvent être des données de type multimédia, combinant des images, des textes et de la voix.

D'autres caractéristiques et avantages de l'invention ressortiront de la description suivante de modes particuliers de réalisation, donnés à titre d'exemples en référence aux dessins annexés, sur lesquels :
- la figure 1 est un bloc-diagramme d'un réseau local de télécommunication en double anneau selon la technique antérieure ;
- la figure 2 est un bloc-diagramme d'un réseau local de télécommunication en anneaux utilisé par la présente invention ;
- la figure 3 est un bloc-diagramme d'un réseau local de télécommunication conforme à l'invention, selon une première réalisation ;
- la figure 4 est un schéma d'une nappe de fibres optiques utilisée dans le réseau de la figure 3 ;
- la figure 5 est un bloc-diagramme d'un réseau local de télécommunication conforme à l'invention, selon une seconde réalisation ;
- la figure 6 est un bloc-diagramme d'un module de raccordement utilisé notamment dans le réseau de la figure 3, selon une première réalisation ;
- la figure 7 est un bloc-diagramme d'un module de raccordement utilisé notamment dans le réseau de la figure 3, selon une seconde réalisation ; et
- la figure 8 est un bloc-diagramme schématique d'un module de raccordement utilisé notamment dans le réseau de la figure 3, selon une troisième réalisation.

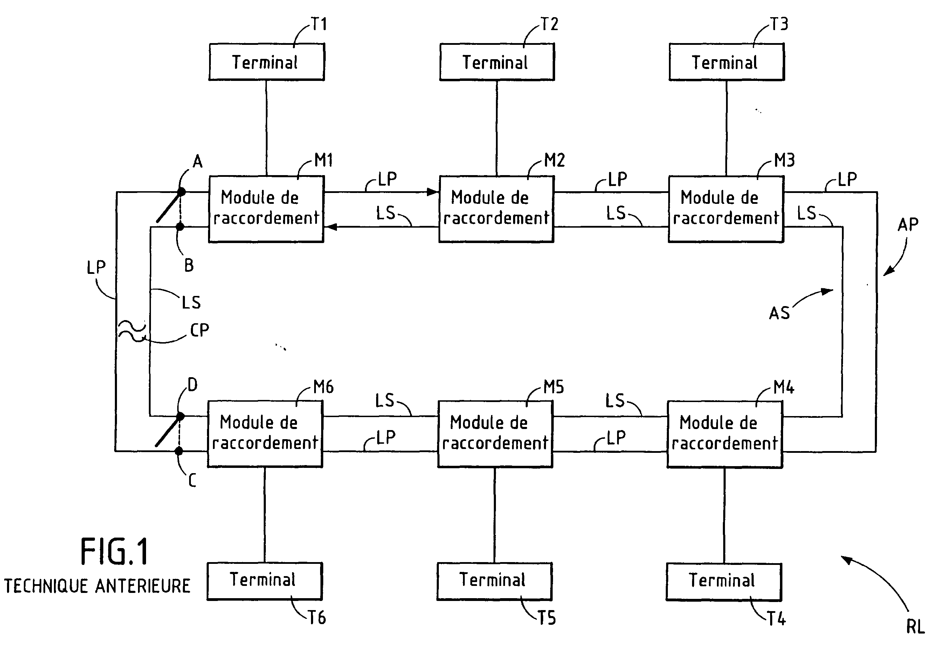

La figure 1 montre un réseau local de télécommunication en anneaux RL selon la technique antérieure. Le réseau local RL comprend des modules de raccordement M1 à M6 interconnectés en série selon une structure en double anneau par deux ensembles de liaisons physiques, ou lignes de transmission, unidirectionnelles LP et LS. Un anneau est défini comme un chemin fermé à travers des modules de raccordement, sur lequel des signaux peuvent circuler. Les liaisons LP constituent avec les modules de raccordement M1 à M6 un anneau dit "primaire" AP, les liaisons LS constituent avec les modules de raccordement M1 et M6 un anneau dit "secondaire" AS.

Des terminaux de télécommunication T1 à T6 sont respectivement reliés aux modules de raccordement M1 à M6 et peuvent ainsi échanger des données à travers le réseau RL. Les terminaux T1 à T6 sont par exemple des stations ou des ordinateurs de type PC (Personal Computer).

Les modules de raccordement M1 à M6 sont conçus de sorte que le sens de propagation des signaux circulant sur l'anneau primaire AP soit opposé au sens de propagation des signaux circulant sur l'anneau secondaire AS.

Les liaisons LP et LS sont typiquement constituées par des paires de fils métalliques, des câbles coaxiaux ou des fibres optiques. Dans ce dernier cas, le réseau local RL est par exemple un réseau conforme à la norme FDDI (Fiber Distributed Data Interface).

Selon le réseau RL de la technique antérieure, en fonctionnement normal, c'est-à-dire en l'absence de panne, toutes les communications entre les terminaux T1 à T6 sont transmises sur l'anneau primaire AP seulement. L'anneau secondaire AS est un anneau de secours qui est utilisé seulement lorsqu'une panne, telle qu'une rupture de ligne ou une défaillance de l'un des modules de raccordement, survient dans le réseau et provoque une ouverture de l'anneau primaire AP.

Ainsi, lorsque par exemple le double anneau AP, AS est rompu entre les modules M1 et M6 comme montré par le repère CP sur la figure 1, ce qui entraîne un arrêt du fonctionnement du réseau, les bornes A et B du module de raccordement M1 situées du côté du module de raccordement M6 sont mises en contact, de même que les bornes C et D du module de raccordement M6 situées du côté du module M1. Ce rebouclage en amont et en aval de la panne CP permet de rétablir la continuité du réseau et de transmettre à nouveau des communications entre les terminaux T1 à T6.

Une interconnexion du réseau RL avec un autre réseau local du même type (non représenté) peut en outre être réalisée de manière connue.

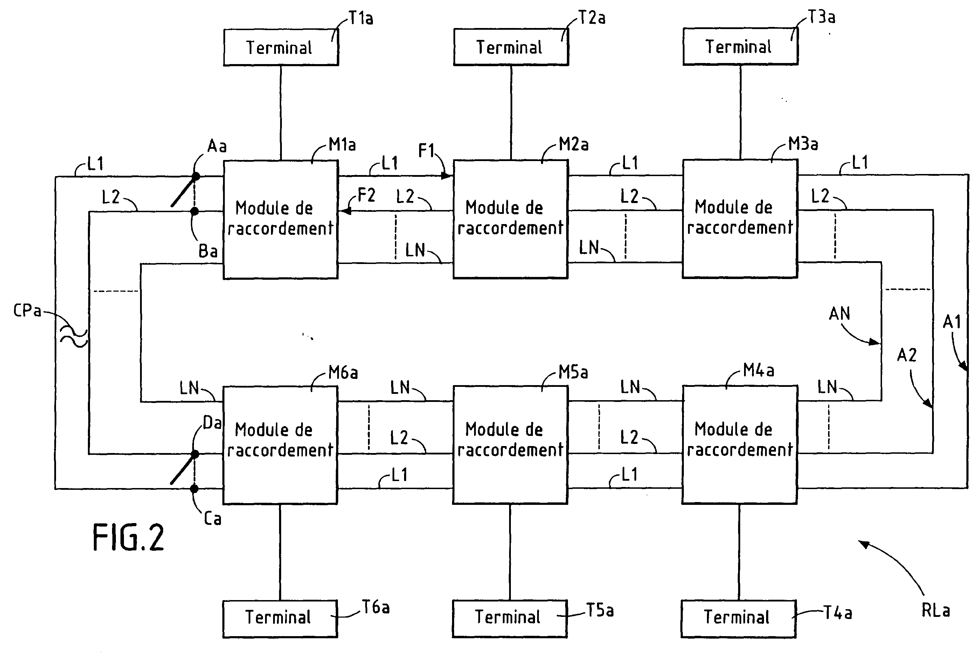

La figure 2 montre un réseau local de télécommunication RLa dont le type de fonctionnement est utilisé par la présente invention. Le réseau local RLa comprend des modules de raccordement M1a à M6a pour raccorder des terminaux T1a à T6a au réseau. Les modules de raccordement M1a à M6a sont reliés entre eux en série selon une structure en anneaux par un nombre entier N d'ensembles de liaisons physiques L1 à LN. Les liaisons L1 à LN sont des lignes de transmission unidirectionnelles identiques, par exemple à fibre optique, et constituent avec les modules M1a à M6a N anneaux concentriques, désignés par A1 à AN. L'entier N est supérieur ou égal à 2.

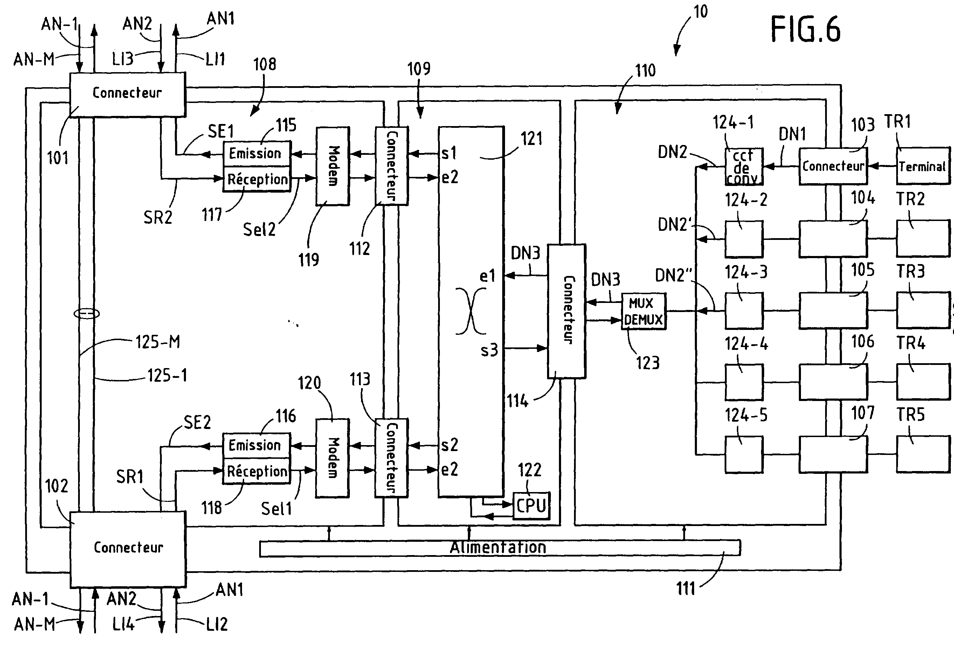

Dans la réalisation montrée à la figure 2, un seul terminal est connecté à chaque module de raccordement. Toutefois, plusieurs terminaux peuvent être associés à un module de raccordement donné, comme il sera expliqué plus loin en référence à la figure 6.

A la différence du réseau RL de la figure 1, le réseau local RLa utilise, en fonctionnement normal, plusieurs anneaux pour assurer l'échange de données entre les terminaux T1a à T6a. Les signaux circulent en sens opposé sur au moins deux des N anneaux, par exemple les anneaux A1 et A2, afin d'autoriser un rebouclage comparable à celui décrit en référence à la figure 1 en cas de panne dans le réseau.

Pour transmettre des données d'un premier terminal, tel que le terminal T1a, vers un second terminal, tel que le terminal T5a, l'un des N anneaux A1 à AN est préalablement sélectionné en fonction d'un critère prédéterminé. Par exemple, l'anneau sélectionné est celui sur lequel l'encombrement est le moins élevé au moment de la réception par le module de raccordement M1a des données délivrées par le terminal T1a. Lesdites données sont alors acheminées sur l'anneau sélectionné depuis le module de raccordement M1a vers le module de raccordement M5a, qui les transmet au terminal T5a.

En variante, en particulier dans le cas où l'entier N est égal à 2, les deux anneaux A1 et A2 transmettant des signaux suivant des sens opposés indiqués respectivement par les flèches F1 et F2, l'anneau sélectionné est celui sur lequel le chemin à parcourir par les données depuis le premier terminal jusqu'au second terminal est le plus court. Dans l'exemple du réseau RLa de la figure 2 et des terminaux T1a et T5a, l'anneau sélectionné est l'anneau A2 puisque les données délivrées par le terminal T1a n'ont à traverser que trois modules de raccordement, à savoir les modules M1a, M6a et M5a, pour atteindre le terminal destinataire T5a.

Les données échangées dans le réseau RLa sont des données de type multimédia, et sont ainsi représentatives de textes, de signaux vocaux et/ou d'images. Le protocole d'échange de données utilisé dans le réseau RLa est par exemple un protocole de type à mode de transfert asynchrone ATM (Asynchronous Transfer Mode). Les données se présentent alors sous forme de cellules.

Le débit binaire total de transmission à travers le réseau RLa, c'est-à-dire le débit total disponible pour les communications entre les terminaux T1a à T6a, est égal à N fois le débit binaire sur chacun des anneaux A1 à AN, et donc à N fois le débit binaire à travers le réseau RL de la figure 1. Ainsi, dans le cadre d'un réseau ATM, le débit binaire à travers le réseau RLa peut atteindre environ N × 155 Mbit/s.

Comme il a été déjà précisé, le réseau local RLa utilisé dans l'invention est apte à rétablir sa continuité lorsque l'un des modules M1a à M6a vient à défaillir ou les lignes de transmission reliant deux modules de raccordement adjacents sont rompues (cf. repère CPa), en mettant en contact les deux anneaux A1 et A2 en des points respectifs Aa, Ba et en des points respectifs Ca, Da situés de part et d'autre de la panne. Pendant la panne, les communications entre les terminaux T1a à T6a sont acheminées seulement sur le nouvel anneau formé par les parties des anneaux A1 et A2 situées respectivement entre les points Aa et Ca et entre les points Ba et Da et opposées à la panne CPa. Le débit binaire à travers le réseau RLa pendant la panne est réduit par rapport au fonctionnement normal, et est égal au débit binaire de l'anneau A1 ou A2. Une fois le réseau réparé, c'est-à-dire le fonctionnement normal rétabli, le débit binaire total redevient égal à N fois celui de l'anneau A1 ou A2. Cette facilité de coupure du réseau peut aussi être mise en oeuvre pour insérer un nouveau module sans perturber le fonctionnement des autres modules et donc des différents terminaux connectés. En effet, l'ouverture du réseau va être identifiée par les modules adjacents comme une panne et entraîner en conséquence un rebouclage automatique.

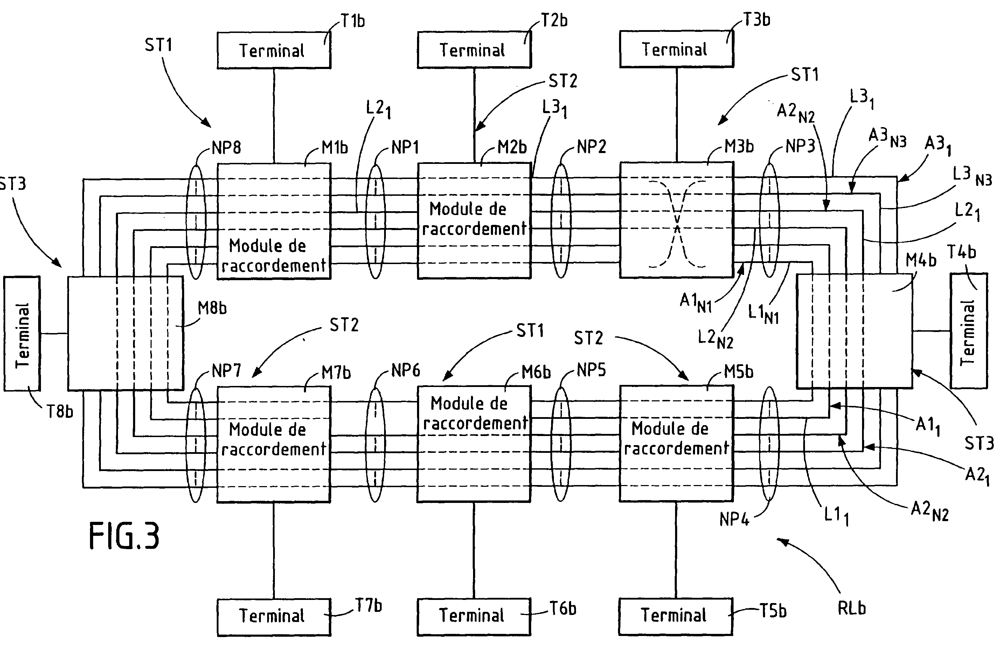

La figure 3 montre un réseau local de télécommunication RLb conforme à l'invention. Le réseau RLb a une configuration générale en anneau, et plus précisément en anneaux concentriques, et comporte des modules de raccordement M1b à M8b auxquels sont raccordés des terminaux respectifs T1b à T8b. Dans la réalisation illustrée à la figure 3, un seul terminal est connecté à chaque module de raccordement. Toutefois, plusieurs terminaux peuvent être associés à un module de raccordement donné, comme il sera expliqué plus loin en référence à la figure 6.

Les modules M1b à M8b sont reliés entre eux selon plusieurs structures en anneaux indépendantes, dites également sous-réseaux. Trois seulement de ces sous-réseaux, désignés par ST1, ST2 et ST3, sont représentés sur la figure 3, pour des raisons de clarté.

Le premier sous-réseau ST1 comprend les modules de raccordement M1b, M3b et M6b, et un nombre entier N1 d'ensembles de liaisons unidirectionnelles L1₁ à L1_{N1} reliant ces modules entre eux en série de manière à constituer N1 anneaux A1₁ à A1_{N1}. Le second sous-réseau ST2 comprend les modules M2b, M5b et M7b, et un nombre entier N2 d'ensembles de liaisons unidirectionnelles L2₁ à L2_{N2} reliant ces modules entre eux en série de manière à constituer N2 anneaux A2₁ à A2_{N2}. Le troisième sous-réseau ST3 comprend les modules de raccordement M4b et M8b, et un nombre entier N3 d'ensembles de liaisons unidirectionnelles L3₁ à L3_{N3} reliant ces modules entre eux de manière à constituer N3 anneaux A3₁ à A3_{N3}. Les nombres entiers N1, N2 et N3 sont supérieurs ou égaux à 1. Selon une réalisation typique de la présente invention, ces entiers sont égaux à 2.

Comme montré en traits pointillés sur la figure 3, les anneaux d'un sous-réseau donné traversent directement les modules de raccordement des autres sous-réseaux. Ainsi, les données circulant sur les liaisons L1₁ à L1_{N1} sont analysées et commutées par les modules de raccordement M1b, M3b et M6b du premier sous-réseau ST1, mais traversent directement les modules de raccordement M2b, M5b et M7b du second sous-réseau ST2 et les modules de raccordement M4b et M8b du troisième sous-réseau ST3. De même, les données circulant sur les liaisons L2₁ à L2_{N2} du second sous-réseau ST2 sont analysées et commutées par les modules de raccordement M2b, M5b et M7b du second sous-réseau ST2, mais traversent directement les modules de raccordement M1b, M3b et M6b du premier sous-réseau ST2 et les modules de raccordement M4a et M8a du troisième sous-réseau ST3. Egalement, les données circulant sur les liaisons L3₁ à L3_{N2} du troisième sous-réseau ST3 sont analysées et commutées par les modules de raccordement M4b et M8b du troisième sous-réseau ST3, mais traversent directement les modules de raccordement M1b, M3b et M6b du premier sous-réseau ST1 et les modules de raccordement M2b, M5b et M7b du second sous-réseau ST2.

En pratique, les sous-réseaux ST1 à ST3 sont indépendants. Par exemple, le réseau RLb conforme à l'invention est installé dans un bâtiment qui est partagé par différentes entreprises, chaque entreprise occupant une partie du bâtiment. Les sous-réseaux du réseau RLb sont alors attribués respectivement auxdites entreprises (au nombre de trois dans l'exemple correspondant à la réalisation de la figure 3).

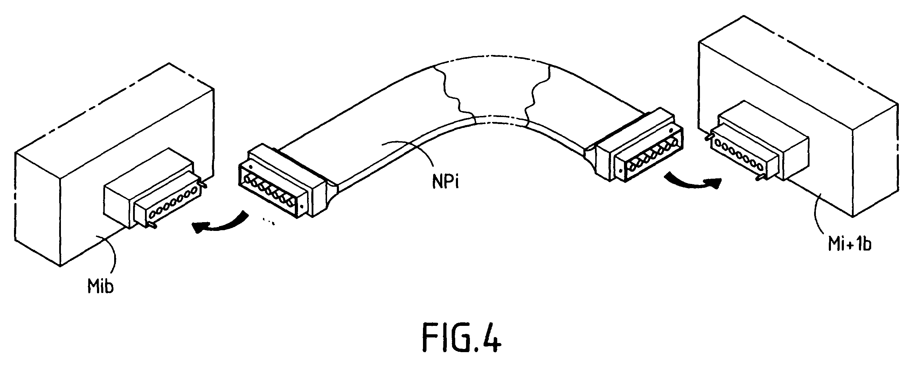

Les liaisons physiques, ou lignes de transmission, L1₁ à L1_{N1}, L2₁ à L2_{N2}, et L3₁ à L3_{N3} sont typiquement des fibres optiques. Les liaisons physiques reliant deux modules de raccordement adjacents donnés Mib et Mi+1b du réseau RLb, où i est un entier compris entre 1 et 7, se présentent sous la forme d'une nappe de fibres optiques NPi. La nappe NPi est illustrée de manière plus détaillée à la figure 4.

Ainsi, les sous-réseaux ST1 à ST3 du réseau RLa sont "fonctionnellement" indépendants, mais agencés selon une structure commune composée des modules de raccordement M1b à M8b et des nappes de fibres optiques NP1 à NP8.

Selon une variante du réseau RLb conforme à l'invention, l'un des modules de raccordement M1b à M8b, par exemple le module M3b, comprend un moyen de commutation, représenté de façon schématique en pointillé à la figure 3, pour interconnecter les sous-réseaux ST1 à ST3, c'est-à-dire commuter des données entre ces sous-réseaux, ou interconnecter seulement deux de ces sous-réseaux. Le moyen de commutation est décrit plus en détail dans la suite de la description.

De préférence, chaque sous-réseau ST1 à ST3 fonctionne de la même manière que le réseau RLa décrit précédemment en référence à la figure 2, et achemine des données de type multimédia selon le protocole ATM par exemple. Ainsi, pour transmettre des données à travers le sous-réseau ST1 depuis le terminal T1b raccordé au module de raccordement M1b vers le terminal T6b raccordé au module de raccordement M6b, l'un des anneaux A1₁ à A1_{N1} est sélectionné en fonction du critère prédéterminé d'encombrement des anneaux ou de chemin le plus court tel que précédemment défini. Sur l'anneau sélectionné, le signal de données produit par le terminal T1b traverse des modules de raccordement du sous-réseau ST1, par exemple les modules M1b, M3b et M6b, où il est analysé, et traverse directement des modules de raccordement d'autres sous-réseaux, à savoir dans ce cas les modules M2b, M4b et M5b.

Egalement, chaque sous-réseau ST1 à ST3 comprend au moins deux anneaux transmettant des signaux suivant des sens opposés. Ainsi, en cas de panne sur l'un des sous-réseaux, les mêmes opérations que dans le réseau RLa sont mises en oeuvre pour rétablir la continuité du sous-réseau.

Toutefois, selon d'autres variantes, au moins l'un des sous-réseaux ST1 à ST3 comprend un seul anneau, ou fonctionne de la même manière que le réseau en double anneau RL de la figure 1.

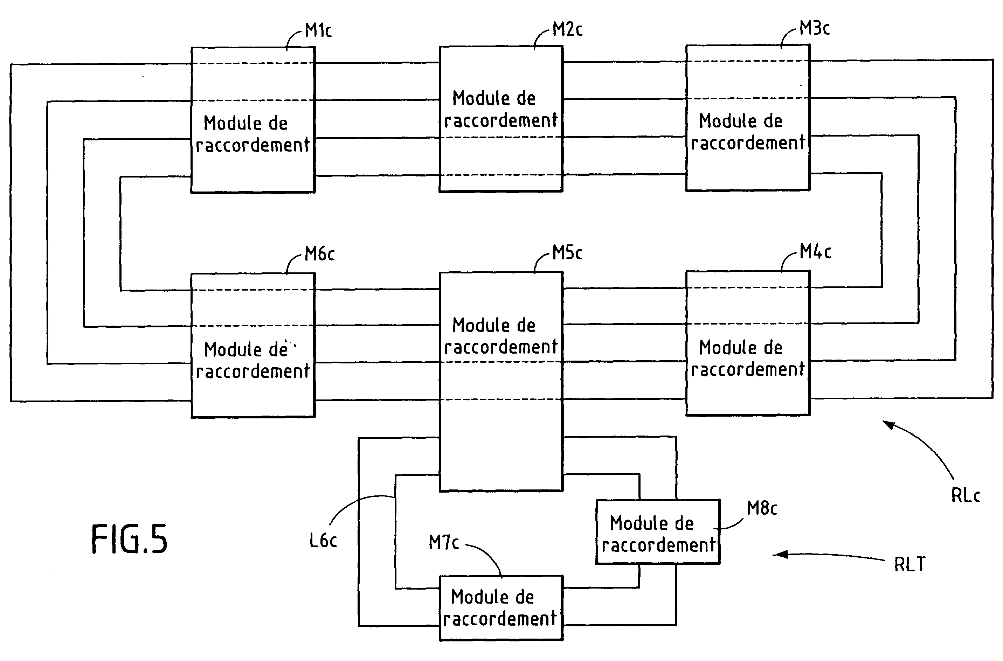

La figure 5 montre un réseau local de télécommunication RLc selon un autre exemple de réalisation de l'invention. Le réseau RLc comprend des modules de raccordement M1c à M6c reliés entre eux de façon à former deux sous-réseaux en double anneau du type des sous-réseaux ST1 à ST3 de la figure 3. Le réseau RLc comprend en outre un moyen de commutation, représenté schématiquement en pointillé dans le module M5c, pour interconnecter le réseau RLc avec un autre réseau en anneaux RLT incluant des modules de raccordement M7c et M8c.

La figure 6 montre en détail un module de raccordement 10 du type des modules M1a à M6a du réseau RLa de la figure 2, des modules M1b à M8b du réseau RLb de la figure 3, ou des modules M1c à M6c du réseau RLc de la figure 5.

Le module de raccordement 10 est couplé par l'intermédiaire de connecteurs 101, 102 respectivement à deux liaisons LI1, LI2 d'un premier anneau AN1 et respectivement à deux liaisons LI3, LI4 d'un second anneau AN2. Les liaisons LI1 à LI4 sont des lignes de transmission unidirectionnelles à fibre optique. Le module de raccordement 10 comprend en outre d'autres connecteurs 103 à 107 auxquels sont raccordés des terminaux respectifs TR1 à TR5, un sous-module d'émission-réception 108, un sous-module de commutation 109 et un sous-module d'interface utilisateur 110. Les trois sous-modules 108, 109 et 110 sont alimentés par un bloc d'alimentation 111 et sont connectés entre eux par des connecteurs internes 112, 113 et 114 du type connecteurs plats. L'utilisation des connecteurs internes 112, 113 et 114 permet le remplacement éventuel d'un sous-module 108, 109 ou 110 dans le module de raccordement 10.

Le sous-module d'émission-réception 108 a pour rôle d'émettre vers les modules de raccordement adjacents au module 10 dans le réseau des signaux numériques de données fournis par le sous-module de commutation 109, et de recevoir et régénérer des signaux numériques de données transmis par les liaisons LI2 et LI3. A cet effet, le sous-module d'émission-réception 108 inclut des moyens d'émission 115, 116, des moyens de réception 117, 118, et des modems 119, 120. Les moyens d'émission 115 et de réception 117 sont reliés respectivement aux liaisons LI1 et LI3 à travers le connecteur 101. Les moyens d'émission 116 et de réception 118 sont reliés respectivement aux liaisons LI4 et LI2 à travers le connecteur 102. Le modem 119 est relié aux moyens d'émission 115 et de réception 117, et au sous-module de commutation 109 à travers le connecteur interne 112. Le modem 120 est relié aux moyens d'émission 116 et de réception 118, et au sous-module de commutation 109 à travers le connecteur interne 113.

Les moyens d'émission 115, 116 et de réception 117, 118 sont des diodes laser et des photodétecteurs respectivement, fonctionnant à une longueur d'onde d'environ 850 nm. Ainsi, les diodes laser et les photodétecteurs peuvent être du type de ceux utilisés classiquement dans les lecteurs de disques optiques.

Le sous-module de commutation 109 commute vers les moyens d'émission 115, 116 des données numériques fournies par le sous-module d'interface utilisateur 110 ou le sous-module d'émission-réception 108. Le sous-module de commutation 109 inclut essentiellement un circuit de commutation 121 et un circuit de commande 122. Le circuit de commutation 121 est relié aux modems 119, 120 respectivement à travers les connecteurs 112, 113, et au sous-module d'interface utilisateur 110 à travers le connecteur 114. Le circuit de commande 122 commande le circuit de commutation 121 et a en outre un rôle d'administration du réseau, pour gérer notamment les pannes. Le circuit 122 est de préférence un microprocesseur de type CPU (Central Processing Unit).

Le sous-module d'interface utilisateur 110 assure l'interface entre les circuits utilisant le protocole du réseau et les terminaux TR1 à TR5 utilisant chacun un protocole qui leur est propre. Le sous-module d'interface utilisateur 110 inclut un multiplexeur/démultiplexeur 123 et des circuits de conversion de protocole 124-1 à 124-5 associés respectivement aux terminaux TR1 à TR5. Les terminaux TR1 à TR5 peuvent être de types différents. Par exemple, le terminal TR1 est un terminal informatique, le terminal TR2 un terminal téléphonique, le terminal TR3 un terminal de gestion de bâtiment gérant un système à capteurs tel qu'un système d'alarme, etc...

En émission, lorsque l'usager de l'un quelconque des terminaux TR1 à TR5 raccordés au module 10, tel que le terminal TR1, souhaite transmettre des données DN1 représentatives d'un texte, d'un signal vocal, ou d'une image vers un terminal raccordé à un autre module de raccordement dans le réseau, les données DN1 délivrées par le terminal TR1 et fournies au sous-module d'interface utilisateur 110 à travers le connecteur 103 sont converties par le circuit 124-1 selon le protocole utilisé dans le réseau, par exemple le protocole ATM. Les données converties DN2, organisées sous forme de cellules, sont appliquées au multiplexeur/démultiplexeur 123 où elles sont multiplexées avec d'autres données DN2', DN2'' éventuellement produites simultanément par d'autres terminaux TR2, TR3 et converties par les circuits de conversion associés 124-2, 124-3. Les données multiplexées DN3 en sortie du multiplexeur/démultiplexeur 123 sont transmises à travers le connecteur 114 à un accès d'entrée el du circuit de commutation 121. Le circuit 121 sélectionne un anneau parmi les anneaux AN1 et AN2 selon l'un des critères prédéterminés d'encombrement des anneaux ou de chemin le plus court définis précédemment, pour les données DN2 issues du terminal TR1 et contenues dans les données multiplexées DN3, ainsi que pour les données DN2 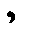 , DN2 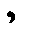 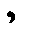 issues des autres terminaux TR2, TR3. Le circuit de commutation 121 dirige les données DN2 reçues, contenues dans les données multiplexées DN3, vers le moyen d'émission 115, 116 correspondant à l'anneau AN1, AN2 sélectionné pour les données DN2, à travers le connecteur 112, 113 et le modem 119, 120 et à partir d'un accès de sortie s1, s2 correspondant. La diode laser 115, 116 émet un signal optique numérique SE1, SE2 en réponse à la réception du signal de données DN2 modulé par le modem 119, 120. Les mêmes opérations que ci-dessus sont mises en oeuvre pour les données DN2 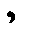 et DN2 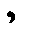 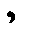 contenues également dans les données DN3 et issues des autres terminaux TR2, TR3.

En réception, les photodétecteurs 117, 118 convertissent des signaux optiques numériques SR2, SR1, reçus des liaisons LI3, LI1 des anneaux AN2, AN1 respectivement, en des signaux électriques Sel2, Sel1. Les signaux électriques Sel2, Sel1 sont démodulés et remis en forme par les modems 119 et 120 et transmis à travers les connecteurs 112, 113 à des accès d'entrée e2 et e3 du circuit de commutation 121. Le circuit de commutation 121 lit les adresses de terminal destinataire dans chaque cellule des signaux Sel2, Sel1. Les cellules issues de chaque liaison LI2, LI3 et pour lesquelles l'adresse de destinataire désigne un terminal autre que les terminaux TR1 à TR5 raccordés au module 10 sont retransmises à partir de l'accès de sortie s1, s2 vers la liaison LI1, LI4 respectivement à travers le connecteur 112, 113, le modem 119, 120 et le moyen d'émission 115, 116. Les autres cellules, pour lesquelles l'adresse de destinataire désigne l'un des terminaux TR1 à TR5, sont dirigées à partir d'un accès de sortie s3 vers le multiplexeur/démultiplexeur 123 à travers le connecteur 114. Le multiplexeur/démultiplexeur 123 démultiplexe les cellules reçues et les aiguille vers les terminaux TR1 à TR5 en fonction des adresses de terminal destinataire incluses dans celles-ci. Les circuits de conversion 124-1 à 124-5 convertissent les données fournies par le circuit 123 selon le ou les protocoles associés respectivement aux terminaux destinataires.

Dans le cas où le module de raccordement 10 est du type de l'un des modules de raccordement des réseaux RLb (figure 3) et RLc (figure 5), le sous-module d'émission-réception 108 comprend en outre un nombre entier M supérieur ou égal à 1 de liaisons internes 125-1 à 125-M reliant directement les connecteurs 101 et 102. Les liaisons internes 125-1 à 125-M assurent la continuité de M anneaux AN-1 à AN-M appartenant à des sous-réseaux autres que celui du module de raccordement 10, de sorte que les signaux circulant sur les anneaux AN-1 à AN-M traversent directement le module 10, c'est-à-dire ne passent pas à travers le circuit de commutation 121 dans le module 10. Les liaisons internes 125-1 à 125-M peuvent toutefois traverser, entre les connecteurs 101 et 102, des amplificateurs ou des circuits de régénération de signal (non représentés) pour amplifier ou régénérer, dans le module 10, les signaux circulant sur les anneaux AN-1 à AN-M.

Selon une variante du module 10, certains des terminaux TR1 et TR5 sont capables de produire et de recevoir des données selon le protocole du réseau. Leurs circuits de conversion associés 124-1 à 124-5 sont alors supprimés.

Selon une autre variante, les liaisons LI1 à LI4 des anneaux AN1 et AN2 sont constituées par des paires de fils métalliques ou des câbles coaxiaux. Les moyens d'émission 115, 116 et de réception 117, 118 sont alors des amplificateurs.

La structure du module de raccordement 10, dans l'exemple illustré à la figure 6, est destinée à être intégrée dans un réseau ou sous-réseau à deux anneaux AN1, AN2. Cette structure peut aisément être généralisée à un plus grand nombre d'anneaux, non nécessairement pair. A chacun des anneaux du réseau ou sous-réseau, sont alors associés un moyen d'émission, un moyen de réception et un modem dans le sous-module d'émission-réception, et des accès d'entrée et de sortie dans le circuit de commutation.

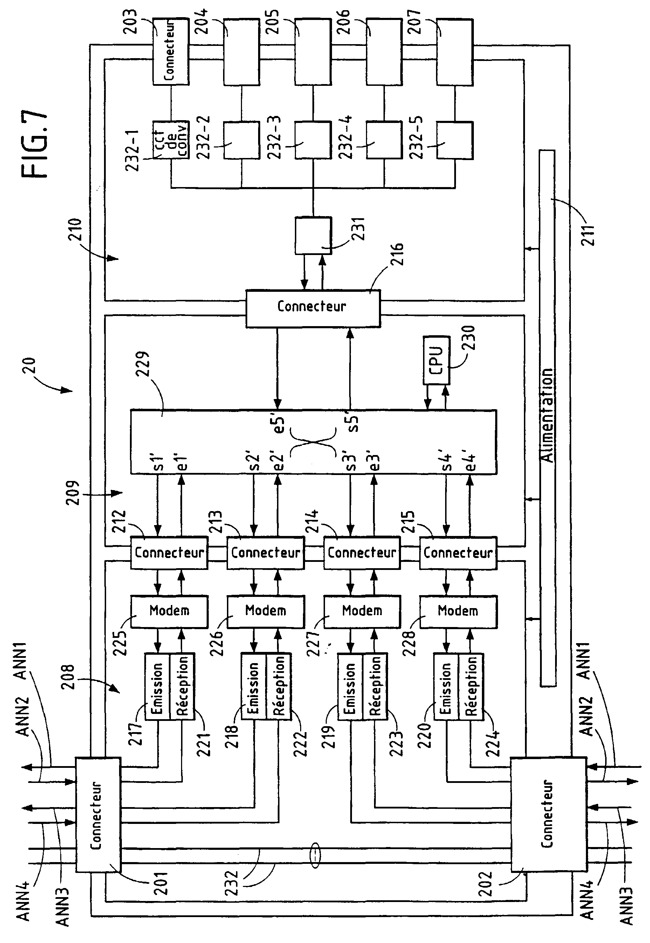

La figure 7 montre un module de raccordement 20 conforme à l'invention, selon un second exemple de réalisation. Le module de raccordement 20 est couplé sur deux côtés opposés à des liaisons de quatre anneaux ANN1 et ANN4 par l'intermédiaire de connecteurs 201 et 202, et comprend des connecteurs 203 à 207 auxquels des terminaux (non représentés) sont reliés. Le module 20 comporte en outre un sous-module d'émission-réception 208, un sous-module de commutation 209, et un sous-module d'interface utilisateur 210. Les sous-modules 208, 209 et 210 sont tous trois alimentés par un bloc d'alimentation 211 et sont connectés entre eux par des connecteurs internes 212 à 216.

Le sous-module d'émission-réception 208 inclut quatre agencements d'éléments d'émission-réception identiques aux agencements 115-117-119 et 116-118-120 de la figure 6. Chaque agencement est constitué par un moyen d'émission 217 à 220, un moyen de réception 221 à 224, et un modem 225 à 228. Le premier agencement 217-221-225 et le second agencement 218-222-226 sont couplés respectivement à deux paires de liaisons des anneaux ANN1 à ANN4 par le connecteur 201. Le troisième agencement 219-223-227 et le quatrième agencement 220-224-228 sont couplés respectivement à deux autres paires de liaisons des anneaux ANN1 à ANN4 par le connecteur 202.

Le sous-module de commutation 209 comprend un circuit de commutation 229 commandé par un circuit de commande 230. Quatre accès d'entrée e1 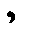 à e4 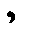 du circuit de commutation 229 sont respectivement reliés aux moyens de réception 221 à 224 à travers les modems 225 à 228 et les connecteurs internes 212 à 215. Quatre accès de sortie s1 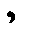 à s4 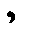 du circuit de commutation 229 sont respectivement reliés aux moyens d'émission 217 à 220 à travers les modems 225 à 228 et les connecteurs internes 212 à 215. Un cinquième accès de sortie s5' et un cinquième accès d'entrée e5' du circuit de commutation 229 sont reliés au sous-module d'interface utilisateur 210 à travers le connecteur 216.

Le sous-module d'interface utilisateur 210 est identique au sous-module 110 de la figure 6, et comprend un multiplexeur/démultiplexeur 231 et des circuits de conversion de protocole 232-1 à 232-5.

Selon un premier mode de réalisation du module de raccordement 20, ce dernier est utilisé dans un réseau ou sous-réseau à quatre anneaux du type respectivement du réseau RLa montré à la figure 2 ou des sous-réseaux ST1 à ST3 de la figure 3, et effectue des opérations comparables à celles du module 10 (figure 6). Notamment, en émission, le circuit de commutation 229 sélectionne l'un des anneaux ANN1 à ANN4 pour transmettre des données depuis un premier terminal raccordé au module vers un second terminal raccordé à un autre module. Dans le cas de l'utilisation du module 20 dans un sous-réseau, des liaisons internes 232 sont prévues pour relier directement les connecteurs 201 et 202 et assurer la continuité d'anneaux d'autres sous-réseaux.

Selon un second mode de réalisation du module de raccordement 20, ce dernier est utilisé dans un réseau ou sous-réseaux à quatre anneaux, mais dans lequel seulement les deux premiers anneaux sont utilisés pour transmettre des données en fonctionnement normal, les deux autres anneaux servant d'anneaux de secours en cas de panne sur les deux premiers anneaux. Ainsi, en fonctionnement normal, le module de raccordement 20 effectue les mêmes opérations que le module 10 de la figure 6 en utilisant les premier et quatrième agencements 217-221-225 et 220-224-228 pour transmettre et recevoir des données sur les anneaux ANN1 et ANN2 du réseau. Lors d'une panne sur les anneaux ANN1, ANN2, tous les signaux devant initialement être transmis sur ces derniers par le module de raccordement 20 sont commutés par le circuit de commutation 229 vers les anneaux de secours ANN3 et ANN4 respectivement à travers les second et troisième agencements 218-222-226 et 219-223-227.

Selon un troisième mode de réalisation du module de raccordement 20, ce dernier est du type du module M3b de la figure 3, c'est-à-dire le module 20 est capable de réaliser l'interconnexion entre deux sous-réseaux comprenant respectivement les paires d'anneaux ANN1-ANN2 et ANN3-ANN4. Une commutation de données à transmettre sur l'un ou l'autre des deux sous-réseaux est effectuée par le circuit de commutation 229, en fonction des adresses des cellules de données fournies par le sous-module d'interface utilisateur 210 à l'accès d'entrée e5' du circuit 229 et des adresses des cellules de données reçues des anneaux ANN1 à ANN4 par le sous-module 208.

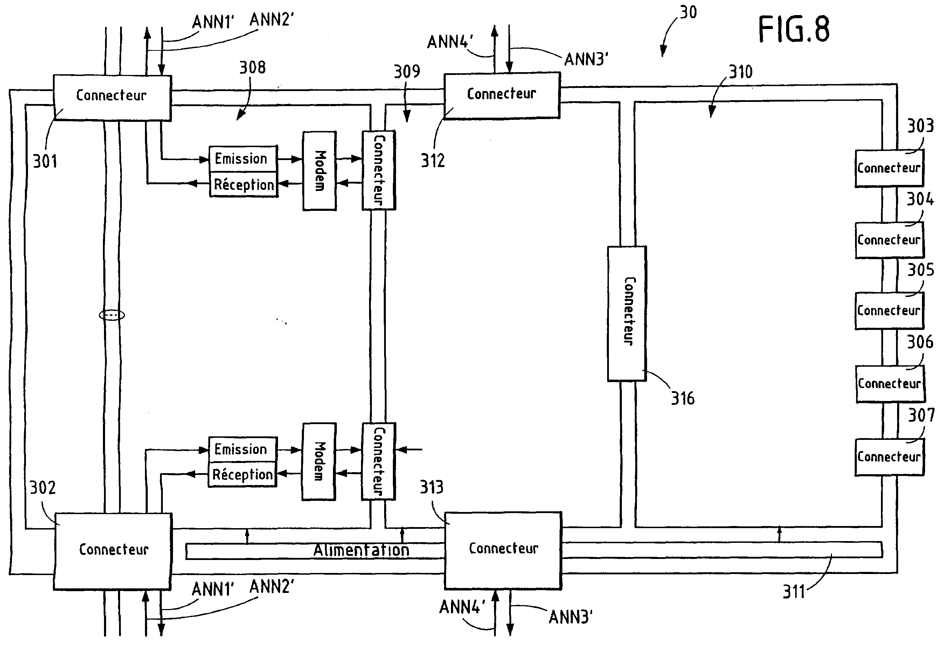

La figure 8 montre de manière schématique un module de raccordement 30 conforme à l'invention, selon un troisième exemple de réalisation. Le module 30 comprend notamment des connecteurs 301, 302 pour coupler le module à des liaisons d'anneaux ANN1', ANN2' d'un premier sous-réseau, des connecteurs 303 à 307 pour relier des terminaux respectifs (non représentés) au module 30, un sous-module d'émission-réception 308, un sous-module de commutation 309, un sous-module d'interface utilisateur 310 et un bloc d'alimentation 311. Les sous-modules 308 et 310 sont respectivement du type des sous-modules 108 et 110 de la figure 6. Le module de raccordement 30 comprend en outre deux connecteurs 312 et 313 reliés au sous-module de commutation 309 pour coupler le module 30 à des liaisons d'anneaux ANN3', ANN4' d'un second sous-réseau. Le sous-module de commutation 309 assure l'interconnexion entre les premier et second sous-réseaux précités d'une manière comparable à celle décrite ci-dessus en référence à la figure 7, ainsi que l'émission-réception des signaux sur les anneaux ANN3' et ANN4'.

La présente invention a été décrite à titre d'exemple seulement pour un protocole de réseau du type ATM. Toutefois, tout autre protocole, tel que les protocoles IP (Internet Protocol) ou IPX (marques déposées), peut être utilisé dans la présente invention. Les cellules du protocole ATM sont alors remplacées par des trames conformes à cet autre protocole.

## Revendications

1. Réseau de télécommunication (RLb) comprenant plusieurs sous-réseaux en anneau (ST1 à ST3), chaque sous-réseau en anneau (ST1) comprenant des modules de raccordement (M1b, M3b, M6b) reliés entre eux de manière à former au moins un anneau (A1₁ à A1_{N1}), le réseau étant caractérisé en ce qu'il a une configuration générale en anneau et en ce que ledit au moins un anneau de chaque sous-réseau (ST1) traverse directement au moins un module de raccordement d'un autre sous-réseau (ST2, ST3).

2. Réseau de télécommunication selon la revendication 1, dans lequel chaque module de raccordement du réseau est relié à deux autres modules de raccordement, non nécessairement du même sous-réseau, par des nappes de fibres optiques (NP1 à NP8).

3. Réseau de télécommunication selon la revendication 1 ou 2, dans lequel chaque module de raccordement comprend plusieurs sous-modules (108-110) reliés entre eux par des connecteurs (112-114) internes au module de raccordement de sorte que chacun de ces sous-modules puisse être remplacé indépendamment des autres sous-modules.

4. Réseau de télécommunication selon l'une quelconque des revendications 1 à 3, comprenant un moyen (229), dans l'un (M3b) desdits modules de raccordement, pour interconnecter au moins deux desdits sous-réseaux.

5. Réseau de télécommunication selon l'une quelconque des revendications 1 à 4, comprenant un moyen (229), dans l'un (M5c) desdits modules de raccordement, pour interconnecter l'un au moins desdits sous-réseaux avec un autre réseau de télécommunication (RLT).

6. Réseau de télécommunication selon l'une quelconque des revendications 1 à 5, dans lequel l'un au moins desdits sous-réseaux comprend au moins deux anneaux transmettant des signaux suivant des sens opposés, afin qu'en cas de panne dans le sous-réseau, la continuité du sous-réseau puisse être rétablie.

7. Réseau de télécommunication selon l'une quelconque des revendications 1 à 6, dans lequel l'un au moins desdits sous-réseaux comprend un moyen (229) pour commuter des données vers au moins un anneau supplémentaire de secours (ANN3, ANN4) du sous-réseau en cas de rupture dudit au moins un anneau du sous-réseau.

8. Réseau de télécommunication selon l'une quelconque des revendications 1 à 7, dans lequel l'un au moins des sous-réseaux comprend plusieurs anneaux, et chaque module de raccordement (10) de ce sous-réseau comprend un moyen (121) pour sélectionner l'un desdits plusieurs anneaux en réponse à la réception par ledit module de raccordement (10) de données (DN1) délivrées par un premier terminal (TR1) raccordé audit module de raccordement et destinées à un second terminal raccordé à un autre module de raccordement du sous-réseau, et un moyen (108) pour transmettre lesdites données sur l'anneau sélectionné vers le second terminal.

9. Réseau selon la revendication 8, dans lequel ledit anneau sélectionné est l'anneau du sous-réseau qui est le moins encombré.

10. Réseau selon la revendication 8, dans lequel ledit anneau sélectionné est l'anneau du sous-réseau pour lequel le chemin à parcourir par lesdites données du premier terminal vers le second terminal est le plus court.

11. Réseau de télécommunication selon la revendication 3 ou l'une quelconque des revendications 4 à 10 lorsqu'elles dépendent au moins de la revendication 3, dans lequel lesdits plusieurs sous-modules comprennent un sous-module d'émission-réception (108) incluant des moyens d'émission (115, 116) et des moyens de réception (117, 118) pour respectivement émettre et recevoir des signaux sur des anneaux du sous-réseau correspondant, un sous-module de commutation (109) pour commuter des données reçues d'au moins un terminal (TR1-TR5) raccordé au module de raccordement (10) vers les moyens d'émission et pour commuter des données reçues des anneaux du sous-réseau correspondant par le sous-module d'émission-réception (108) vers ledit moins un terminal (TR1-TR5) ou vers lesdits anneaux en fonction d'adresses contenues dans ces données, et un sous-module d'interface (110) réalisant l'interface entre ledit au moins un terminal et le sous-module de commutation.

12. Réseau de télécommunication selon la revendication 11, dans lequel les moyens d'émission et les moyens de réception comprennent respectivement des lasers (115, 116) et des photodétecteurs (117, 118).

13. Réseau de télécommunication selon l'une quelconque des revendications 1 à 12, transmettant des données de type multimédia.

14. Réseau de télécommunication selon l'une quelconque des revendications 1 à 13, dans lequel au moins l'un desdits modules de raccordement (10) comprend plusieurs connecteurs (103 à 107) auxquels peuvent être reliés plusieurs terminaux respectifs (TR1 à TR5) pour raccorder ces derniers au réseau.

15. Réseau de télécommunication selon la revendication 14, dans lequel lesdits plusieurs terminaux respectifs (TR1 à TR5) comprennent au moins l'un des terminaux suivants: terminal informatique, terminal téléphonique, terminal de gestion de bâtiment, et terminal multimédia.

16. Réseau de télécommunication selon l'une quelconque des revendications 1 à 15, dans lequel chaque module de raccordement (M1b à M8b) du réseau est relié à tous les anneaux (A1₁ à A1_{N1}, A2₁ à A2_{N2}, A3₁ à A3_{N3}) du réseau.
